# EUROPEAN PATENT SPECIFICATION

(11) **EP 4 452 129 B1**
(45) Date of publication and mention of the grant of the patent: **22.10.2025**
(21) Application number: 22830870.6
(22) Date of filing: 08.12.2022
(51) Int. Cl.: A61C 17/22, A61C 17/16, A61C 9/00

(54) **PERSONAL CARE DEVICE**
KÖRPERPFLEGEVORRICHTUNG
DISPOSITIF DE SOINS PERSONNELS

(30) Priority: 23.12.2021 EP 21217445
(43) Date of publication of application: 30.10.2024
(73) Proprietor: Koninklijke Philips N.V., 5656 AG Eindhoven (NL)
(72) Inventor: JOHNSON, Mark Thomas, 5656 AG Eindhoven (NL); GERHARDT, Lutz Christian, 5656 AG Eindhoven (NL); VAN DEN DUNGEN, Wilhelmus Andreas Marinus Arnoldus Maria, 5656 AG Eindhoven (NL); KOOIJMAN, Gerben, 5656 AG Eindhoven (NL)
(74) Representative: Philips Intellectual Property & Standards
(86) International application number: PCT/EP2022/084885
(87) International publication number: WO 2023/117439

(56) References cited:
- WO-A1-2020/016546
- WO-A1-2021/148764
- US-A1- 2015 348 320

## Description

### FIELD OF THE INVENTION

The present invention relates to the field of personal care devices, and in particular to the field of personal care devices that capture digital impressions of one or more features of a user.

### BACKGROUND OF THE INVENTION

It is known to provide personal care devices with the ability or functionality to capture digital impressions (e.g. images) of a feature or part of a user during use. For example, Intra-Oral Scanner (IOS) devices use projected light (e.g. laser or structured light) and an image sensor to capture images of the dentogingival tissues. These images can be processed to create a three-dimensional (3D) model of the scanned surface. Data provided by IOS can therefore be useful for oral care, including the detection of common dental pathologies such as caries, tooth discoloration, misalignment. Also, it may be advantageous to capture and compare repeated IOS images, to enable identification of changes in dentogingival tissues over time for example.

Because personal care devices, such as electric brushing or shaving devices, are used on a regular (e.g. daily) basis, they may provide a suitable vehicle to regularly capture images of a user. Accordingly, there is trend to integrate cameras or imaging sensors into personal care devices, such as toothbrushes for example. However, because a main usage characteristic of such a personal care device may be its vibration or cyclical/periodic movement, images acquired by an image capture device integrated with a personal care device are typically distorted and/or blurred by the movement/vibration of the device.

Although image stabilization techniques are known for portable handheld devices (e.g. smart phone, digital photo cameras, etc.), such techniques are only designed and optimized for low frequency (e.g. <10 Hz), erratic (e.g. non-periodic, random, etc.) user-induced motions. Because a personal care device (such as a toothbrush) typically moves or vibrates at a much higher periodic frequency (e.g. >20-300 Hz), there remains a need to stabilize the image capture process and/or make the image acquisition process robust to device movements/vibrations generated by a personal care device.

WO2020016546A1 describes a dental treatment appliance with a drive mechanism for moving a bristle carrier relative to a handle, and a dental treatment system which transmits signals towards the oral cavity and receives signals returned from the oral cavity.

WO2021148764A1 describes an electric toothbrush having a fluid delivery system for delivering a fluid to the oral cavity of the user.

### SUMMARY OF THE INVENTION

The invention is defined by the claims.

According to examples in accordance with an aspect of the invention, there is provided a personal care device comprising:
an image capture device adapted, in use, to capture images of one or more features of a user;
vibratory means adapted to vibrate the personal care device so that, in use, the personal care device (and the image capture device) vibrates with a periodic vibration cycle having a vibration frequency;
an illumination device configured, in use, to generate a pulsed illumination for illuminating part of the user;
a control unit adapted to control the illumination device to generate two or more pulses of illumination during a single vibration cycle of the personal care device; and
a processor arrangement configured to determine, as a target part of the vibration cycle, first and second portions of the vibration cycle for which the angular velocity of a part of the personal care device meets a predetermined requirement,
wherein the control unit is adapted to control the illumination device to generate a first pulse of illumination during the first portion of the vibration cycle and to generate a second pulse of illumination during the second portion of the vibration cycle.

Proposed concepts thus aim to provide schemes, solutions, concepts, designs, methods and systems pertaining to aiding and/or improving image acquisition from a vibratory personal care device having an image capture device, the image of which is influenced by the device vibration. This may either be a camera fixed rigidly to the vibrating device which may then vibrate with the device. Alternatively the camera sensor itself may be situated in a stationary part of a device (e.g. a brush handle) whilst the optical system of the device (like an optical fiber, the imaging lens of the optical system) are subject to the device vibrations. In particular, embodiments of the invention propose generating multiple pulses of illumination during a single vibration cycle of the personal care device. Through illuminating part of the user multiple times during a single vibration cycle of the personal care device, improved images (e.g. images exhibiting less blur and/or distortion) may be obtained. In this way, improved images may be obtained from a vibratory personal care device.

In particular, it is proposed that, to reduce or minimize distortions in images acquired from vibrating personal care device (in use), illumination pulses may be adapted based on the vibration cycle. For instance, a timing of illumination of part of the user's oral cavity may be synchronised with the vibration cycle, thus ensuring the illumination only occurs during preferred or optimal parts of the vibration cycle.

It is also proposed to determine a target part of the vibration cycle based on a parameter of the periodic vibration cycle. The illumination device may then be controlled to synchronise the pulsed illumination with the target part of the vibration cycle. By way of example, a movement and/or a drive signal of the vibratory means may be monitored and then analysed to determine a period/portion of the vibration cycle which exhibits low/zero motion of the personal care device.

Embodiments may be of particular relevance to vibratory oral care device, such as electric toothbrushes for example. Thus, in an embodiment, the personal care device may comprise an oral care device, the image capture device may be adapted, in use, to capture images of one or more features of a user's oral cavity, and the illumination device may be configured, in use, to generate a pulsed illumination for illuminating part of the user's oral cavity.

In other words, some embodiments propose to adapt pulsed illumination of the user's oral cavity based on one or more sensed operating parameters of the oral care device, so as to provide images of improved quality. Embodiments may therefore facilitate stable and high-quality image acquisition during tooth brushing. Such embodiments may be particularly relevant to teledentistry propositions, for example, by enabling improved imaging of a user's tooth, gum, tongue, etc. For instance, images obtained by proposed embodiments may aid dental care treatments and/or decision making. Accordingly, embodiments may be used in relation to dental treatment selection so as to support a dental care professional when selecting treatment for a subject.

Further, embodiments may facilitate image-based diagnostics, superior location sensing, therapy planning (e.g. orthodontics, aligners) and/or dental treatment monitoring.

By being integrated into the normal brushing regimen of a user (instead of using separate devices such as smart phones, dental endo-scopes or handheld intraoral scanners), embodiments may support improved dental care. Improved image-based dental care may therefore be provided by proposed concepts.

Embodiments may, however, be applicable to other vibratory personal care devices, such as shavers, skin cleansing devices, and the like.

It has been realized that by controlling image capture device based on target part of the vibration cycle of the personal care device, higher quality images (in terms of reduced blur and/or distortion) may be obtained, thus aiding oral/dental care decision making.

Embodiments may therefore provide the advantage that decision making in selecting a care treatment can be improved through the use of images captured by a vibratory personal care device. For example, embodiments may enable a larger number of oral care treatment options to be available (e.g through the provision of more and/or improved information about a subject's oral health).

The control may be adapted to control the image capture device to synchronise a timing of the pulsed illumination with the vibration cycle. This may help to ensure adequate lighting conditions for reducing image blur and/or distortion whilst ensuring total illumination. That is, activation of the illumination device for unnecessary time periods may be avoided.

In some embodiments, the control unit may be adapted to control the illumination device to generate a pulsed illumination an integer multiple of twice the vibration frequency, for example 2, 4 or 8 times during the vibration.

The control unit may be adapted to set an illumination duration of the illumination device to be less than or equal to a quarter of the period of the vibration waveform, and more preferably less than or equal to an eighth of the period of the vibration waveform, and even more preferably less than or equal to a sixteenth of the period of the vibration waveform. In this way, illumination for capture of an image may be set to be fast enough relative to the camera vibration to reduce or minimise image distortion or blur. That is, the duration of an illumination pulse may be set to be less than or equivalent to the duration/period of minimal motion of the personal care device. For example, for a ~50% duty cycle square wave-driven vibration, it may be preferable to adapt the duration of an illumination pules to be less than a quarter of the vibration period, so as to ensure the acquisition of useful images.

Some embodiments propose identifying a target part (e.g. low velocity/motion part) of the vibration cycle, and then controlling the pulsed illumination based on the identified target part of the vibration cycle. Through control of the pulsed illumination according to a target part of the vibration cycle, improved images (e.g. images exhibiting less blur and/or distortion) may be obtained. In particular, it is proposed that, to reduce or minimize distortions in images acquired from vibrating personal care device (in use), timing and/or settings of the pulsed illumination may be adapted based on the vibration cycle. For instance, a timing of an illumination pulse may be synchronised with the target part of the vibration cycle, thus ensuring the image capture only occurs during a preferred or optimal part of the vibration cycle.

It is also proposed to determine the target part of the vibration cycle by sensing operation of the personal care device. By way of example, a movement, angular velocity and/or a drive signal or means may be monitored and then analysed to determine a period/portion of the vibration cycle which exhibits low/zero motion of the personal care device.

For example, the vibratory means may comprise a vibrator, and a drive sensor may be employed to sense a drive signal of the vibrator. The processor arrangement may then be adapted to determine the target part of the vibration cycle based on a time period when then sensed drive signal meets a predetermined drive signal requirement. For instance, the sensed drive signal may be representative of a drive current or voltage of the vibrator, and the predetermined drive signal requirement may be that the magnitude of the drive current or voltage crosses a threshold value. In this way, sensing of the drive signal may be employed to determine the target part of the vibration cycle (e.g. identify the timing of a low velocity period within the vibration cycle).

By way of further example, a movement sensor may be employed to sense an angular velocity of a part of the personal care device. The processor arrangement may then be adapted to determine the target part of the vibration cycle based on a time period when then sensed angular velocity meets a predetermined velocity requirement. For instance, the predetermined velocity requirement may be that the magnitude of the sensed angular velocity does not exceed a velocity threshold value. Thus, movement/motion sensing concepts may be employed to determine the target part of the vibration cycle (e.g. identify the timing of a low velocity period within the vibration cycle).

In other examples, a Hall effect sensor may be employed to sense a magnetic field at a part of the personal care device. The processor arrangement may then be adapted to determine the target part of the vibration cycle based on a time period when then sensed magnetic field meets a predetermined magnetic field requirement. Existing Hall sensors that are already integrated within conventional personal care devices may therefore be leveraged to provide new and/or extended functionality, for example.

In yet further examples, accelerometer vibration sensor may be employed to sense an acceleration or excursion of a vibration of a part of the personal care device. The control unit may then be adapted to determine the target part of the vibration cycle based on a time period when the magnitude of the sensed vibration meets a predetermined vibration requirement. For instance, the predetermined vibration requirement may be that the acceleration of the sensed vibration exceeds a vibration threshold value. Similarly the low speed is usually associated with the extremities of the motion, whereby the predetermined vibration requirement may be that the excursion of the sensed vibration exceeds a vibration threshold value. Thus, vibration sensing concepts/apparatus may be employed to determine the target part of the vibration cycle (e.g. identify the timing of a low velocity period within the vibration cycle). Existing and/or simple vibration sensing techniques and/or apparatus may therefore be employed to accurately identify the timing(s) of low velocity of the personal care device.

Having summarised above the various techniques can be employed for determining a target part of the vibration cycle, it is now noted that some proposed embodiments may employ a concept of identifying a plurality of portions of the vibration cycle as the target part of the vibration cycle. That is, the target part of the vibration cycle may comprise a plurality of different and time-separated sub-portions of the vibration cycle. The number of sub-portions of the vibration cycle forming the target part of the vibration cycle may equal the number of generated pulses of illumination during a single vibration cycle of the personal care device. Put another way, each pulse of illumination may be controlled to occur in a respective sub-portion of the cycle.

Furthermore, the image capture device may comprise a camera. The control unit may then be adapted to control the camera to capture first and second images during the first and second portions of the vibration cycle, respectively. In this way, image capture may be synchronized with the pulses of illumination, thus ensuring optimal lighting conditions for short/fast image capture (which may, in turn, reduce image blur and/or distortion). Embodiments may thus be employed in conjunction with different types of image capture devices, including, for example, global shutter cameras or free-running rolling shutter cameras that are out of synchronisation with vibration of the personal care device.

In some embodiments, the image capture device may comprise a rolling shutter camera. Image acquisition may thus be synchronized with the pulses of illumination, thus image data with reduced blur and/or distortion. This image data may be combined with image data from different portions of different frames of the camera, thus facilitating construction of a single high quality image (from a plurality of captured frames).

Embodiments may thus be employed in conjunction with different types of image capture devices, including, for example, cameras that are out of synchronisation with vibration of the personal care device.

The device may further comprise: an image processor configured to generate a reconstructed image based on the first and second images.

For example, the predetermined requirement may be that the magnitude of the sensed angular velocity does not exceed a first velocity threshold value. In this manner two or more images with low image blur can be created during the course of the vibration.

In a further development the image processor may then be configured to process the first and second images with an image processing algorithm to identify a target region of each of the first and second image, to extract image data from the identified target regions, and to generate a reconstructed image comprising the extracted image data.

In other examples, the predetermined requirement may be that the magnitude of the sensed angular velocity exceeds a second velocity threshold value. Optionally the image processor may then be configured to process the first and second images with an image combination algorithm to generate a reconstructed image based on the first and second images. Such a reconstructed image may have the benefit of providing a wider field of view and/or being of improved image quality (e.g. have reduced blur).

The personal care device may comprise a toothbrush, and may preferably comprise an electric toothbrush that is adapted to vibrate in use. In other embodiments, the personal care device may comprise a mouthpiece, shaver, or skin cleansing brush that is adapted to vibrate in use. One or more proposed concept(s) may therefore be employed in a range of different personal care devices. Embodiments may therefore have wide application in the field of personal care devices (and image capture and/or processing concepts for images captured by vibratory personal care devices).

According to another aspect of the invention, there is provided a method of controlling a personal care device, wherein the personal care device comprises: vibratory means adapted to vibrate the personal care device so that, in use, the personal care device vibrates with a periodic vibration cycle having a vibration frequency; an image capture device adapted, in use, to capture images of one or more features of a user; and an illumination device configured, in use, to generate a pulsed illumination for illuminating part of the user, and wherein the method comprises: determining, as a target part of the vibration cycle, first and second portions of the vibration cycle for which the angular velocity of a part of the personal care device meets a predetermined requirement; and controlling the illumination device to generate two or more pulses of illumination during a single vibration cycle of the personal care device, wherein control the illumination device comprises controlling the illumination device to generate a first pulse of illumination during the first portion of the vibration cycle and to generate a second pulse of illumination during the second portion of the vibration cycle.

According to yet another aspect of the invention, there is provided a computer program comprising computer program code means which is adapted, when said computer program is run on a computer, to implement a method according to proposed embodiment.

Thus, there may also be provided a computer system comprising: a computer program product according to proposed embodiment; and one or more processors adapted to perform a method according to a proposed concept by execution of the computer-readable program code of said computer program product.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 is a simplified schematic block diagram of an electric toothbrush 10 according to a proposed embodiment;
Figure 2A is a graph showing an exemplary variation in angle θ (of displacement) and angular velocity of the brush head of Figure 1 over time as the brush head vibrates, wherein the variation in displacement angle θ of the brush head is depicted by the solid line, and wherein the variation in angular velocity v of the brush head 14 is depicted by the dashed line;
Figure 2B depicts an exemplary alignment (i.e. synchronization) of the pulses of illumination from the illumination device with respect to the vibration cycle depicted in Figure 2A;
Figure 3 is a simplified schematic block diagram of a mouthpiece according to a proposed embodiment; and
Figure 4 is a simplified block diagram of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. The mere fact that certain measures are recited in mutually different dependent claims does not indicate that a combination of these measures cannot be used to advantage.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

It should be understood that the Figures are merely schematic and are not drawn to scale. It should also be understood that the same reference numerals are used throughout the Figures to indicate the same or similar parts.

The invention proposes concepts for aiding and/or improving image acquisition from a vibratory personal care device having an image capture device. In particular, embodiments may provide a system, device and/or method which controls the illumination device to generate two or more pulses of illumination during a single vibration cycle of the personal care device. Control of the image capture device may be then undertaken according to the pulses of illumination during the vibration cycle. Through such illumination of the user's oral cavity, improved images (e.g. images exhibiting less blur and/or distortion) may be obtained.

In particular, it is proposed that, to reduce or minimize distortions in images acquired from a vibrating personal care device, the illumination device may be controlled to generate multiple pulses of illumination during a single vibration cycle of the personal care device (in use). More specifically, it has been realised that one or more parts of the vibration cycle may be better suited to image capture, for example due to exhibiting reduced motion/movement. By illuminating the user's oral cavity during such parts of the vibration cycle, a reduction in a required length of exposure to capture an adequate amount of blur free images may be obtained. For instance, when using two captures at the same position, less light is needed because the two images may be combined improving the S/N ratio and overall exposure, and lowering power needs. Such embodiments may thus help to reduce or minimise power consumption whilst still ensuring suitable illumination to facilitate a reduced/shortened exposure duration of the image capture device.

Further, by synchronising image acquisition with the multiple pulses of illumination, multiple images may be obtained for a single vibration cycle. The multiple images may be advantageously analysed individually, whereby more images are realised due to the use of multiple pulses possibly where the camera is imaging different parts of the scene. Additionally data from these multiple images may then be used (e.g. combined, merged, selected) to generate a reconstructed image of further improved quality. For instance, first and second images may be captured during the first and second portions of the vibration cycle, respectively, and a reconstructed image may be generated based on the first and second images. In this way, multiple portions of image data may be used to facilitate construction of a single high quality image (or a wide view image).

It has further been realised that the timing(s) of such a part of the vibration cycle preferred (or optimal) for image capture may be determined based on operating parameters of the personal care device. Examples of such operating parameters include: vibrator/motor current; magnetic field; device motion; and angular velocity of a part of the personal care device. Simple detection of an operation of the personal care device to determine a preferred, optimal or target timing of image capture may therefore be employed, thus enabling improved or optimised image capture.

In other words, embodiments propose to control the timing of illumination pulses based on the vibration of the personal care device (and thus the image capture device), so as to provide images of improved quality.

Embodiments may therefore facilitate stable and high-quality image acquisition during tooth brushing. Such embodiments may be particularly relevant to teledentistry propositions, for example, by enabling improved imaging of a user's tooth, gum, tongue, etc. For instance, images obtained by proposed embodiments may aid dental care treatments and/or decision making. Accordingly, embodiments may be used in relation to dental treatment selection so as to support a dental care professional when selecting treatment for a subject.

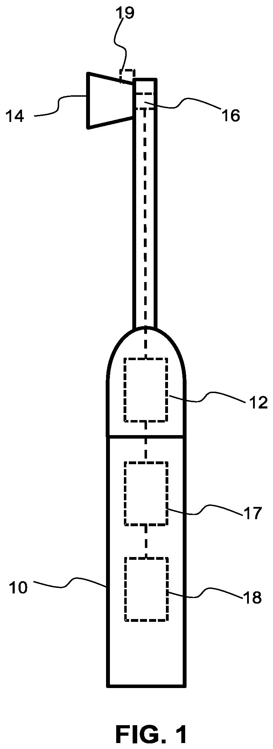

Referring to Figure 1, there is shown a simplified schematic block diagram of an electric toothbrush 10 according to a proposed embodiment. The electric toothbrush 10 comprises vibratory means 12 (specifically, a motor) that is adapted, in use, to vibrate a brush head 14 of the electric toothbrush 10 (with a frequency of about 200Hz).

The electric toothbrush 10 also comprises an image capture device 16 (e.g. digital camera) that is adapted, in use, to capture images of one or more oral features of a user.

To aid reduction in the exposure duration that is required to capture an adequately exposed image, the oral care device (i.e. electric toothbrush) 10 also comprises an illumination device 19 (e.g. LEDs) that are configured, in use, to illuminate a part of the user's oral cavity. That is, where the sensitivity (e.g. ISO) and/or the lens aperture of the image capture device 16 may be fixed and/or limited, a reduction in the required length of exposure to capture an adequate amount of light may be obtained through illumination of the user's oral cavity by the illumination device 19.

The electric toothbrush 10 is also provided with a sensor arrangement 17 that is adapted to sense an operating parameter of the personal care device, and a control unit 18 that is adapted to control the image capture device based on the target part of the vibration cycle.

Further, the control unit 18 is adapted to control the illumination device 19 to synchronise a timing of illumination by the illumination device 19 with the vibration cycle. More specifically, the control unit 18 is adapted to control the illumination device 19 to generate two or more pulses of illumination during a single vibration cycle of the personal care device.

The motor 12 is configured to cause the brush head 14 to repeatedly rotate clockwise then anti-clockwise by around 10°-25° from a rest position in a periodic manner. In this way, the brush head 14 vibrates with a periodic vibration waveform.

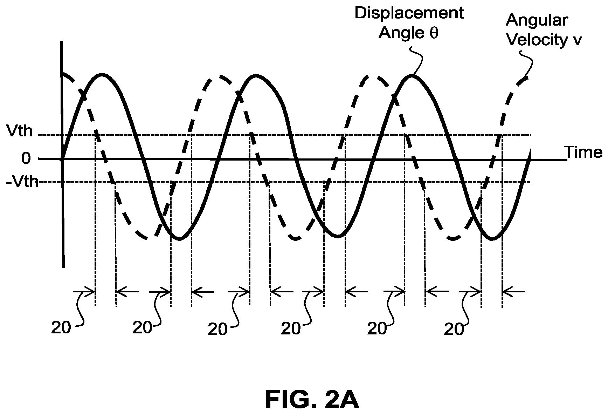

By way of further illustration, Figure 2A depicts a graph showing an exemplary variation in angle θ (of displacement) and angular velocity of the brush head 14 over time as the brush head 14 vibrates. The variation in displacement angle θ of the brush head 14 is depicted by the solid line, whereas the variation in angular velocity v of the brush head 14 is depicted by the dashed line.

It is seen from the variations depicted in Figure 2A that 'low speed" periods 20, i.e. time periods wherein the magnitude of angular velocity v of the brush head 14 is below a predetermined threshold value Vth, can be identified. More specifically, it is seen that, when the absolute value of the displacement angle θ reaches a maximum value, such that the time-derivative of displacement angle θ changes polarity (i.e. when the solid line changes direction), the angular velocity v of the brush head 14 is near-zero. It is proposed that these low speed periods 20 provide the most appropriate opportunities for image capture using an image capture device that may have limited speed and exposure tuning capabilities. Accordingly, several embodiments are based on a proposal that the illumination provided by the illumination device 19 may be synchronised with the two low speed periods 20 of a single vibration cycle.

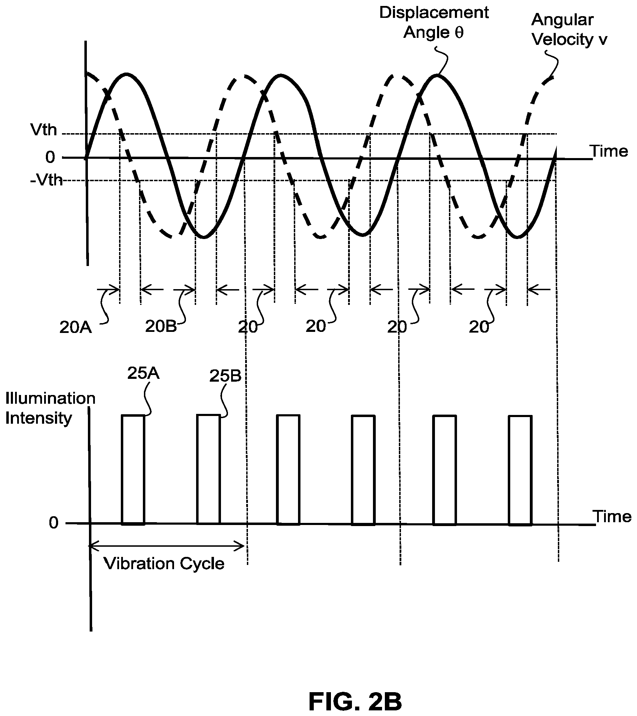

By way of illustration, Figure 2B depicts such an alignment (i.e. synchronization) of the pulses of illumination from the illumination device 19 with respect to the vibration cycle depicted in Figure 2A. In the Figure 2B, the lower graph depicts the variation of illumination intensity provided by the illumination device 19 with respect to the same timescale as the graph of Figure 2A (reproduced in Figure 2B as the upper graph). From the lower graph of Figure 2B, it can be seen that: a first pulse 25A of illumination provided by the illumination device 19 is synchronised with a first low speed period 20A of a single vibration cycle; and a second pulse 25B of illumination provided by the illumination device 19 is synchronised with a second low speed period 20B of a single vibration cycle.

By illuminating part of the user's oral cavity multiple times during a single vibration cycle of the oral care device, and then by synchronising image acquisition with the multiple pulses of illumination, multiple images may be obtained for a single vibration cycle. Alternatively, where a free running camera is employed to continuously capture images, image data may only be acquired/accumulated during pulses of illumination. Data from these multiple images may then be used (e.g. combined, merged, selected) to generate a reconstructed image of further improved quality. In this way, multiple portions of image data may be used to facilitate construction of a single high quality image or a wide view image.

Turning back to the specific embodiment of Figure 1, the control unit 18 is adapted to control the pulsed illumination based on a parameter of the periodic vibration waveform.

In this example, the control unit 18 is adapted to control the illumination device 19 to generate two pulses of illumination during a single vibration cycle of the oral care device. Specifically, the control unit 18 is adapted to synchronise the two pulses of illumination with the low speed periods 20 of the vibration cycle. In this way, the image capture is synchronised with both the pulsed illumination and the low speed periods 20, thus reducing an amount of movement that may cause blurring and/or distortion in a captured image.

Furthermore, in this example, the control unit 18 is also adapted to set the illumination duration of an illumination pulse to be less than or equal to a quarter of the period of the vibration waveform. In practice, if the threshold value Vth is chosen to be a value less than half the maximum angular velocity, the illumination duration of a single illumination pulse is controlled to less than or equal to an eighth of the period of the vibration waveform. It may be preferable, however, to limit the illumination duration to shorter periods (i.e. lower duration values), so as to limit a duration of image acquisition to small low speed periods 20 during which the angular velocity v of the brush head 14 is close to zero (i.e. where the threshold value Vth is close to zero).

For instance, it may be preferable to adapt the control unit 18 to set the illumination duration to be less than or equal to a tenth of the period of the vibration waveform, and even more preferably less than or equal to a sixteenth of the period of the vibration waveform.

Moreover, for the case of a rolling shutter camera for example, it may be even more preferable to limit the illumination duration further on a line-by-line basis to be equivalent to less than one pixel shift on the image capture device - that is, the shift of the image during motion that is within the pixel resolution. Here, reference to pixel may encompass a single sensing element of an image sensor or a sensing element (single sensor) of an image sensor array. That is, a pixel may be thought of as being a single element of a sensed image, wherein the sensed image is formed from a plurality of sensed elements (i.e. pixels).

In this way, the total illumination duration may be shared (i.e. divided) across all rows of the camera sensor, so that light is incident on the sensor for short pulsed period per row, with the cumulative total duration of all of the pulses adding up to the exposure duration. This may be implemented by exposing each row of the sensor to incident light for a fraction of the exposure duration or by pulsing an illumination source for fraction of the exposure duration with the pulsing synchronized with the row exposure time of each row of the rolling shutter camera sensor.

As an example, with the distance to the object fixed, and motion fixed, the pixel shift speed may be calculated. For instance, if the image capture device has a sensor with 1024*768 pixels, the image area captured being 10 mm wide, and motion image area being 2 mm left and 2 mm right with a vibration period of 2 ms, the exposure duration may be 1 ms. Movement will thus be 4mm in ½ period (1ms), and 4mm is covered by 4/10*1024 = 410 pixels. A single pixel image movement takes 1ms/410 = 2.4µs. Allowing for ½ a pixel shift during exposure, 1.2 µs. Thus, 1 ms exposure means: smaller than 1ms/768 = 1.3 µs light exposure per row.

Also, reduction of the illumination duration may prevent pixel shift during exposure, e.g. by ensuring that exposure of an image camera pixel is from the same position and thus will not blur with the next pixel position. Although the embodiment of Figure 1 has been described as employing a brush head 14 that repeatedly rotates clockwise then anti-clockwise by around 10°-25° from a rest position in a periodic manner, it will be appreciated that other embodiments may employ a brush head that vibrates in a different manner. For instance, alternative embodiments may comprise a brush head that shakes (left and right, or up and down) repeatedly, i.e. repeatedly displaces (laterally or vertically) in opposite directions from a rest position. Such embodiments will still exhibit a cyclical vibration pattern having variations in displacement and velocity over time that form periodic waveforms as depicted in Figure 2A, and thus have repeating 'low speed' periods that are identifiable (e.g. according to the drive parameters and/or control of the vibratory means).

That is, although the proposed concept(s) have been described above with reference to rotating / angular motion of the vibrating part of the oral care device, the proposed concept(s) may be employed in other vibratory personal care devices exhibiting repetitive vibratory motion. Also, in case of multi-dimensional motion, periods of low/zero speed may be identified with respect to multiple dimensions and used to control the timing of a plurality of illumination pulses in a single vibration cycle of the personal care device.

Also, although the proposed concept(s) have been described above with the illumination device being controlled to generate two pulses of illumination during a single vibration cycle of the personal care device, alternative embodiments may not be limited to generating only two pulses of illumination during a single vibration cycle of the personal care device. In other embodiments, the control unit may be adapted to control the illumination device to generate a pulsed illumination at integer multiple of twice the vibration frequency, (e.g. 2, 4, 6, 8 etc. pulses of illumination during a single vibration cycle of the personal care device).

Embodiments may thus propose the use of a strobing illumination which flashes (i.e. pulses on) at twice the frequency of vibration (or a harmonic thereof) of the personal care device. Short duty cycles of the pulses of illumination (e.g. <=10%) may help to ensure that vibration blur in captured images is minimized.

By pulsing/flashing at two times the frequency of vibration, there are different possibilities depending upon the timing of the pulses relative to the oscillation motion (i.e. the phase of the pulsed illumination).

In a first example, if the pulses of illumination are controlled to occur during the low speed periods (i.e. when the amplitude of displacement angle is near a maximum), the phase of the oscillation is such that the two illumination positions do not occur at the same device position. In this instance, two different images are captured: one for the displacement angle is positive and the other for when the displacement angle is negative. That is, the two images are captured for two different directions. These images may be combined to generate a single, improved image, having a wider angle of view.

In a second example, if the pulses of illumination are controlled to occur when the displacement angle is substantially zero (i.e. when there is a near zero displacement angle), the two illumination positions will occur at substantially the same position. That is, the two images are captured for the same direction. Data from these images may be processed to generate a single, higher-quality image. In this example we illustrate an advantage of pulsing at a high velocity part of the vibration.

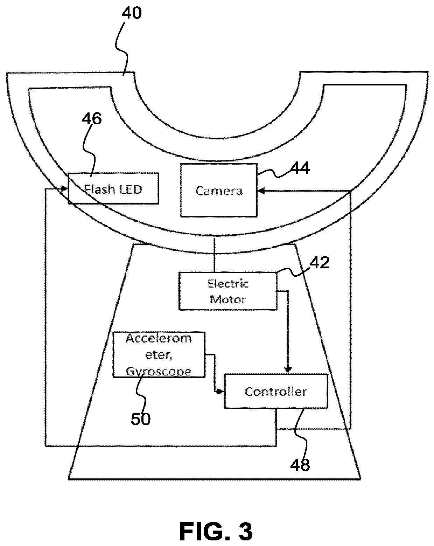

Referring to Figure 3, there is shown a simplified schematic block diagram of a cleaning or treatment mouthpiece 40 according to a proposed embodiment. The mouthpiece 40 is adapted to be inserted into a user's mouth and vibrate (in use) for oral cleaning purposes.

The mouthpiece 40 comprises vibratory means 42 (specifically, an electric motor) that is adapted, in use, to cause the mouthpiece to vibrate with periodic vibration waveform (having a for example a frequency in the range of 50Hz-500Hz).

The mouthpiece 40 also comprises an image capture device 44 positioned in the tray of the mouthpiece and adapted, in use, to capture images of one or more oral features of the user. A flash LED 46 is also provided in the tray of the mouthpiece for illuminating the oral cavity of the user, in use. The image capture device 44 and LED 46 are configured to be controlled by a control unit (i.e. controller) 48 of the mouthpiece.

In particular, the control unit 48 is configured to control an exposure parameter of the camera 44 and activation the flash LED 46 based on a parameter of the periodic vibration waveform of the mouthpiece 40. For determining a parameter of the periodic vibration waveform of the mouthpiece, the mouthpiece 40 comprises a sensor arrangement 50 that is adapted to detect properties of the movement/vibration of the mouthpiece. Specifically, in this example, the sensor arrangement 50 comprises an accelerometer and gyroscope (inertial measurement unit) for detecting variations in displacement and velocity of the mouthpiece 40. Information about the detected variations in displacement and velocity of the mouthpiece 40 is provided to the control unit 48 and, based on this information, the control unit 48 determines parameters of the periodic vibration waveform of the mouthpiece 40 (such as period, frequency, amplitude, zero-crossing timings, etc.)

As already explained above with reference to the embodiment of Figure 1, the control unit 48 determines periods of 'low speed/velocity' of the mouthpiece 40, i.e. time periods wherein the magnitude of velocity of the mouthpiece 40 is below a predetermined threshold value. The control unit 48 then controls the illumination device 46 to generate a pulse of illumination during the two periods of 'low speed/velocity' of a single vibration cycle of the mouthpiece 40. The control unit 48 also controls an exposure parameter of camera so that image capture is timed to occur during the pulses of illumination.

However, it is noted that, in this embodiment, the image capture device 44 comprises a rolling shutter camera configured to operate at an image capture frame rate. With respect to such a rolling shutter camera, trade-offs in operating characteristics may be required. For example, rolling shutter cameras may be more cost effective (e.g. cheaper) but may take longer for a full image capture depending on the acquisition settings and/or capabilities. An 'exposure period' is then considered to the time period for which data from the rolling shutter camera is acquired. For instance, image data from the rolling shutter camera 44 may be acquired for a tenth of a frame, thus resulting in the effective exposure duration being a tenth of the period of the rolling shutter camera frame. Accordingly, the control unit 48 is thus further is adapted to control an exposure parameter taking accounting of the frame rate of the rolling shutter camera.

In this example, a first exposure parameter comprises a start of exposure timing (i.e. the time at which image data capture from the rolling shutter camera is commenced/started), and the control unit 48 is adapted to control the start of capture of image data from the rolling shutter to be synchronised with the pulses of illumination. Specifically, the control unit 48 is adapted to synchronise the start of image data capture from the rolling shutter camera with both the pulses of illumination and the low speed periods of the vibration cycle (identified based on information from the sensor arrangement 50). In this way, the image capture device 44 is controlled so that image data capture is synchronised with the pulses of illumination (and low speed periods), thus reducing an amount of movement that may cause blurring and/or distortion in a captured image.

Furthermore, in this example, a second exposure parameter comprises an exposure duration of the image capture device 44 (i.e. length of image data capture from the rolling shutter camera), and the control unit 48 is adapted to set the image data capture duration according to the duration of an illumination pulse. By way of example, it may be preferable to adapt the control unit 48 to set the image data capture exposure duration to be less than or equal to the duration of an illumination pulse.

That is, for image acquisition using a rolling shutter camera 44, it is proposed to adapt the exposure duration to be fast relative to the camera vibration, e.g. effective exposure time (i.e. image data acquisition time from the rolling shutter camera 44) is adapted to be, at most, equivalent to the duration/period of minimal motion of the mouthpiece 40. For instance, for a ~50% duty cycle square wave-driven vibration, the exposure duration may be, less than or equal to a quarter of the vibration period.

By way of further example, an embodiment may comprise a processor arrangement that is configured to determine a target part of the vibration cycle based on a parameter of the periodic vibration cycle. More specifically, the processor arrangement may be configured to determine, as the target part of the vibration cycle, first and second portions of the vibration cycle for which the angular velocity of a part of the personal care device meets a predetermined requirement. For such an embodiment, the control unit may then control the illumination device to generate a first pulse of illumination during the first portion of the vibration cycle and to generate a second pulse of illumination during the second portion of the vibration cycle. Furthermore, the control unit may also control the image capture device to capture first and second images during the first and second portions of the vibration cycle, respectively. Optionally an image processor can then be employed to generate a reconstructed image based on the first and second images. In this way, high quality regions of captured images may be identified and then identified high-quality regions of a plurality of different images may be employed to build up (i.e. construct) a single, high-quality image.

For instance, the predetermined requirement may be defined to require the magnitude of the sensed angular velocity to not exceed a first velocity threshold value (i.e. require a low velocity). Again both images may be used independently of each other. In such an embodiment, the image processor may further process the first and second images with an image processing algorithm to identify a target region of each of the first and second image, to extract image data from the identified target regions, and to generate a reconstructed image comprising the extracted image data. That is, parts of the images from the low speed periods of a vibration cycle may be used to build up and generate an optimised image.

Alternatively, the predetermined requirement may be defined to require that magnitude of the sensed angular velocity to exceed a second velocity threshold value (i.e. require a medium or high velocity, which occurs at certain periods in the vibration cycle). In such an embodiment, the images will be captured with the brush head being at substantially the same position, e.g. zero displacement). Again both images may be used independently of each other. The image processor may then further process the first and second images with an image combination algorithm to generate a reconstructed image based on the first and second images. That is, with the images being captured from the same angle/position, the images may be combined together to form a new, improved image.

Image segments comprising image data of higher quality than the reference image may thus be identified and used to construct an improved/optimal image from multiple different captured images.

From the above description of various concepts and embodiments, it will be appreciated that there is proposed a method of controlling a personal care device, wherein the personal care device comprises: vibratory means adapted to vibrate the personal care device so that, in use, the personal care device vibrates with a periodic vibration cycle having a vibration frequency; an image capture device adapted, in use, to capture images of one or more features of a user; and an illumination device configured, in use, to generate a pulsed illumination for illuminating part of the user. The method comprises: controlling the illumination device to generate two or more pulses of illumination during a single vibration cycle of the personal care device.

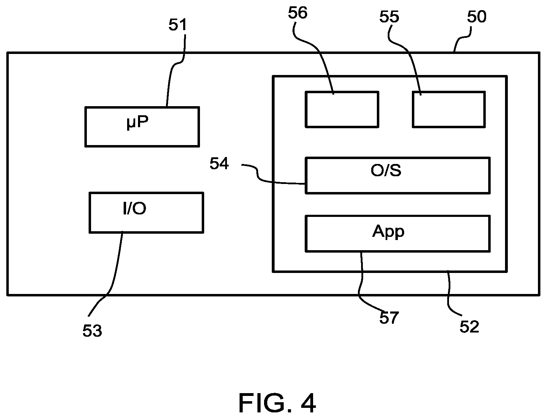

Figure 4 illustrates an example of a computer 50 within which one or more parts of an embodiment may be employed. Various operations discussed above may utilize the capabilities of the computer 500. For example, one or more parts of a system for providing a subject-specific user interface may be incorporated in any element, module, application, and/or component discussed herein. In this regard, it is to be understood that system functional blocks can run on a single computer or may be distributed over several computers and locations (e.g. connected via internet), such as a cloud-based computing infrastructure.

The computer 50 includes, but is not limited to, PCs, workstations, laptops, PDAs, palm devices, servers, storages, and the like. Generally, in terms of hardware architecture, the computer 50 may include one or more processors 51, memory 52, and one or more I/O devices 53 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 51 is a hardware device for executing software that can be stored in the memory 52. The processor 51 can be virtually any custom made or commercially available processor, a central processing unit (CPU), a digital signal processor (DSP), or an auxiliary processor among several processors associated with the computer 50, and the processor 51 may be a semiconductor based microprocessor (in the form of a microchip) or a microprocessor.

The memory 52 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 52 may incorporate electronic, magnetic, optical, and/or other types of storage media. Note that the memory 52 can have a distributed architecture, where various components are situated remote from one another, but can be accessed by the processor 51.

The software in the memory 52 may include one or more separate programs, each of which comprises an ordered listing of executable instructions for implementing logical functions. The software in the memory 52 includes a suitable operating system (O/S) 54, compiler 56, source code 55, and one or more applications 57 in accordance with exemplary embodiments. As illustrated, the application 57 comprises numerous functional components for implementing the features and operations of the exemplary embodiments. The application 57 of the computer 50 may represent various applications, computational units, logic, functional units, processes, operations, virtual entities, and/or modules in accordance with exemplary embodiments, but the application 57 is not meant to be a limitation.

The operating system 54 controls the execution of other computer programs, and provides scheduling, input-output control, file and data management, memory management, and communication control and related services. It is contemplated by the inventors that the application 57 for implementing exemplary embodiments may be applicable on all commercially available operating systems.

Application 57 may be a source program, executable program (object code), script, or any other entity comprising a set of instructions to be performed. When a source program, then the program is usually translated via a compiler (such as the compiler 56), assembler, interpreter, or the like, which may or may not be included within the memory 52, so as to operate properly in connection with the O/S 54. Furthermore, the application 57 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, .NET, and the like.

The I/O devices 53 may include input devices such as, for example but not limited to, a mouse, keyboard, scanner, microphone, camera, etc. Furthermore, the I/O devices 53 may also include output devices, for example but not limited to a printer, display, etc. Finally, the I/O devices 53 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 53 also include components for communicating over various networks, such as the Internet or intranet.

If the computer 50 is a PC, workstation, intelligent device or the like, the software in the memory 52 may further include a basic input output system (BIOS) (omitted for simplicity). The BIOS is a set of essential software routines that initialize and test hardware at startup, start the O/S 54, and support the transfer of data among the hardware devices. The BIOS is stored in some type of read-only-memory, such as ROM, PROM, EPROM, EEPROM or the like, so that the BIOS can be executed when the computer 800 is activated.

When the computer 50 is in operation, the processor 51 is configured to execute software stored within the memory 52, to communicate data to and from the memory 52, and to generally control operations of the computer 50 pursuant to the software. The application 57 and the O/S 54 are read, in whole or in part, by the processor 51, perhaps buffered within the processor 51, and then executed.

When the application 57 is implemented in software it should be noted that the application 57 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 57 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The proposed image capture and/or processing methods, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Figs. 1 and 3 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A personal care device (10) comprising:
an image capture device (16) adapted, in use, to capture images of one or more features of a user;
vibratory means (12) adapted to vibrate the personal care device so that, in use, the personal care device vibrates with a periodic vibration cycle having a vibration frequency;
an illumination device (19) configured, in use, to generate a pulsed illumination for illuminating part of the user;
a control unit (18) adapted to control the illumination device to generate two or more pulses of illumination during a single vibration cycle of the personal care device; and
a processor arrangement configured to determine, as a target part of the vibration cycle, first and second portions of the vibration cycle for which the angular velocity of a part of the personal care device meets a predetermined requirement,
wherein the control unit is adapted to control the illumination device to generate a first pulse of illumination during the first portion of the vibration cycle and to generate a second pulse of illumination during the second portion of the vibration cycle.

2. The device of claim 1, wherein the personal care device (10) comprises an oral care device, and wherein the illumination device (19) is configured, in use, to generate a pulsed illumination for illuminating part of the user's oral cavity.

3. The device of claim 1 or 2, wherein the control unit (18) is adapted to control the illumination device (19) to a generate a pulsed illumination at an integer multiple of twice the vibration frequency of the vibration cycle.

4. The device of any of claims 1 to 3, where the control unit (18) is adapted to set an illumination duration of the illumination device (19) to be less than or equal to a quarter of the period of the vibration waveform, and more preferably less than or equal to an eighth of the period of the vibration waveform, and even more preferably less than or equal to a sixteenth of the period of the vibration waveform.

5. The device of any of claims 1 to 4, wherein the image capture device (16) comprises a camera, and wherein the control unit (18) is adapted to control the camera to capture first and second images during the first and second portions of the vibration cycle, respectively.

6. The device of any of claims 1 to 5, wherein the personal care device (10) further comprises:
an image processor configured to generate a reconstructed image based on the first and second images.

7. The device of claim 6, wherein the predetermined requirement is that the magnitude of the sensed angular velocity does not exceed a first velocity threshold value.

8. The device of claim 6 or 7 and wherein the image processor is configured to process the first and second images with an image processing algorithm to identify a target region of each of the first and second image, to extract image data from the identified target regions, and to generate a reconstructed image comprising the extracted image data.

9. The device of claim 6, wherein the predetermined requirement is that the magnitude of the sensed angular velocity exceeds a second velocity threshold value, and wherein the image processor is configured to process the first and second images with an image combination algorithm to generate a reconstructed image based on the first and second images.

10. The device of any of claims 1 to 9, wherein the personal care device comprises a toothbrush, a mouthpiece, a shaver a skin cleansing brush.

11. A non-therapeutical method of controlling a personal care device, wherein the personal care device comprises: an image capture device adapted, in use, to capture images of one or more features of a user; vibratory means adapted to vibrate the personal care device so that, in use, the personal care device vibrates with a periodic vibration cycle having a vibration frequency; and an illumination device configured, in use, to generate a pulsed illumination for illuminating part of the user, and wherein the method comprises:
determining, as a target part of the vibration cycle, first and second portions of the vibration cycle for which the angular velocity of a part of the personal care device meets a predetermined requirement; and,
controlling the illumination device to generate two or more pulses of illumination during a single vibration cycle of the personal care device,
wherein control the illumination device comprises controlling the illumination device to generate a first pulse of illumination during the first portion of the vibration cycle and to generate a second pulse of illumination during the second portion of the vibration cycle.

12. A computer program comprising computer program code means which is adapted, when said computer program is run on a computer, to implement the method claim 11.

## Patentansprüche

1. Körperpflegevorrichtung (10), umfassend:
eine Bildaufnahmevorrichtung (16), die adaptiert ist, um in Verwendung Bilder von einem oder mehreren Merkmalen eines Benutzers aufzunehmen;
ein Vibrationsmittel (12), das dazu adaptiert ist, die Körperpflegevorrichtung in Vibration zu versetzen, sodass die Körperpflegevorrichtung in Verwendung mit einem Vibrationszyklus vibriert, der eine Vibrationsfrequenz aufweist;
eine Beleuchtungsvorrichtung (19), die dazu konfiguriert ist, eine gepulste Beleuchtung zum Beleuchten eines Teils des Benutzers zu erzeugen;
eine Steuereinheit (18), die dazu adaptiert ist, die Beleuchtungsvorrichtung zu steuern, während eines einzelnen Vibrationszyklus der Körperpflegevorrichtung zwei oder mehr Beleuchtungspulse zu erzeugen; und
eine Prozessoranordnung, die dazu konfiguriert ist, als einen Zielteil des Vibrationszyklus erste und zweite Abschnitte des Vibrationszyklus zu bestimmen, für die die Winkelgeschwindigkeit eines Teils der Körperpflegevorrichtung eine vorgegebene Anforderung erfüllt,
wobei die Steuereinheit dazu adaptiert ist, die Beleuchtungsvorrichtung zu steuern, während des ersten Abschnitts des Vibrationszyklus einen ersten Beleuchtungspuls zu erzeugen und während des zweiten Abschnitts des Vibrationszyklus einen zweiten Beleuchtungspuls zu erzeugen.

2. Vorrichtung nach Anspruch 1, wobei die Körperpflegevorrichtung (10) eine Mundpflegevorrichtung umfasst und wobei die Beleuchtungsvorrichtung (19) dazu konfiguriert ist, bei Verwendung eine gepulste Beleuchtung zum Beleuchten eines Teils der Mundhöhle des Benutzers zu erzeugen.

3. Vorrichtung nach Anspruch 1 oder 2, wobei die Steuereinheit (18) dazu adaptiert ist, die Beleuchtungsvorrichtung (19) zu steuern, eine gepulste Beleuchtung bei einem ganzzahligen Vielfachen der doppelten Vibrationsfrequenz des Vibrationszyklus zu erzeugen.

4. Vorrichtung nach einem der Ansprüche 1 bis 3, wo die Steuereinheit (18) dazu adaptiert ist, eine Beleuchtungsdauer der Beleuchtungsvorrichtung (19) kleiner oder gleich einem Viertel der Periode der Vibrationswellenform, und bevorzugter kleiner oder gleich einem Achtel der Periode der Vibrationswellenform und noch bevorzugter kleiner oder gleich einem Sechzehntel der Periode der Vibrationswellenform einzustellen.

5. Vorrichtung nach einem der Ansprüche 1 bis 4, wobei die Bildaufnahmevorrichtung (16) eine Kamera umfasst und wobei die Steuereinheit (18) dazu adaptiert ist, die Kamera zu steuern, während des ersten und zweiten Abschnitts des Vibrationszyklus ein erstes beziehungsweise ein zweites Bild aufzunehmen.

6. Vorrichtung nach einem der Ansprüche 1 bis 5, wobei die Körperpflegevorrichtung (10) weiter Folgendes umfasst:
einen Bildprozessor, der dazu konfiguriert ist, ein rekonstruiertes Bild basierend auf dem ersten und dem zweiten Bild zu erzeugen.

7. Vorrichtung nach Anspruch 6, wobei die vorbestimmte Anforderung ist, dass die Größe der erfassten Winkelgeschwindigkeit einen ersten Geschwindigkeitsschwellenwert nicht überschreitet.

8. Vorrichtung nach Anspruch 6 oder 7 und wobei der Bildprozessor dazu konfiguriert ist, das erste und das zweite Bild mit einem Bildverarbeitungsalgorithmus zu verarbeiten, um jeweils einen Zielbereich des ersten und des zweiten Bilds zu identifizieren, Bilddaten aus den identifizierten Zielbereichen zu extrahieren und ein rekonstruiertes Bild zu erzeugen, das die extrahierten Bilddaten umfasst.

9. Vorrichtung nach Anspruch 6, wobei die vorbestimmte Anforderung ist, dass die Größe der erfassten Winkelgeschwindigkeit einen zweiten Geschwindigkeitsschwellenwert überschreitet, und wobei der Bildprozessor dazu konfiguriert ist, das erste und das zweite Bild mit einem Bildkombinationsalgorithmus zu verarbeiten, um basierend auf dem ersten und dem zweiten Bild ein rekonstruiertes Bild zu erzeugen.

10. Vorrichtung nach einem der Ansprüche 1 bis 9, wobei die Körperpflegevorrichtung eine Zahnbürste, ein Mundstück, einen Rasierer oder eine Hautreinigungsbürste umfasst.

11. Nicht-therapeutisches Verfahren zum Steuern einer Körperpflegevorrichtung, wobei die Körperpflegevorrichtung umfasst: eine Bildaufnahmevorrichtung, die dazu adaptiert ist, bei Verwendung Bilder von einem oder mehreren Merkmalen eines Benutzers aufzunehmen; Vibrationsmittel, die dazu adaptiert sind, die Körperpflegevorrichtung in Vibration zu versetzen, sodass die Körperpflegevorrichtung bei Verwendung mit einem periodischen Vibrationszyklus vibriert, der eine Vibrationsfrequenz aufweist; und eine Beleuchtungsanordnung, die dazu konfiguriert ist, bei Verwendung eine gepulste Beleuchtung zum Beleuchten eines Teils des Benutzers zu erzeugen, und wobei das Verfahren Folgendes umfasst:
Bestimmen, als einen Zielteil des Vibrationszyklus, erster und zweiter Abschnitte des Vibrationszyklus, für die die Winkelgeschwindigkeit eines Teils der Körperpflegevorrichtung eine vorgegebene Anforderung erfüllt, und
Steuern der Beleuchtungsvorrichtung, während eines einzelnen Vibrationszyklus der Körperpflegevorrichtung zwei oder mehr Beleuchtungspulse zu erzeugen,
wobei Steuern der Beleuchtungsvorrichtung Steuern der Beleuchtungsvorrichtung umfasst, während des ersten Abschnitts des Vibrationszyklus einen ersten Beleuchtungspuls zu erzeugen und während des zweiten Abschnitts des Vibrationszyklus einen zweiten Beleuchtungspuls zu erzeugen.

12. Computerprogramm, das Computerprogrammcodemittel umfasst, die dazu adaptiert sind, wenn das Computerprogramm auf einem Computer läuft, das Verfahren nach Anspruch 11 zu implementieren.

## Revendications

1. Dispositif de soins personnels (10), comprenant :
un dispositif de capture d'image (16) adapté, lors de l'utilisation, pour capturer des images d'une ou de plusieurs caractéristiques d'un utilisateur ;
des moyens de vibration (12) adaptés pour faire vibrer le dispositif de soins personnels de telle sorte que, lors de l'utilisation, le dispositif de soins personnels vibre selon un cycle de vibration présentant une fréquence de vibration ;
un dispositif d'éclairage (19) configuré, lors de l'utilisation, pour générer un éclairage pulsé pour éclairer une partie de l'utilisateur ;
une unité de commande (18) adaptée pour commander le dispositif d'éclairage pour générer deux, ou plus, impulsions d'éclairage pendant un seul cycle de vibration du dispositif de soins personnels ; et
un agencement de processeur configuré pour déterminer, en tant que partie cible du cycle de vibration, des première et seconde parties du cycle de vibration pour lesquelles la vitesse angulaire d'une partie du dispositif de soins personnels répond à une exigence prédéterminée,
dans lequel l'unité de commande est adaptée pour commander le dispositif d'éclairage pour générer une première impulsion d'éclairage pendant la première partie du cycle de vibration et pour générer une seconde impulsion d'éclairage pendant la seconde partie du cycle de vibration.

2. Dispositif selon la revendication 1, dans lequel le dispositif de soins personnels (10) comprend un dispositif de soins buccaux et dans lequel le dispositif d'éclairage (19) est configuré, lors de l'utilisation, pour générer un éclairage pulsé pour éclairer une partie de la cavité buccale de l'utilisateur.

3. Dispositif selon la revendication 1 ou 2, dans lequel l'unité de commande (18) est adaptée pour commander le dispositif d'éclairage (19) pour générer un éclairage pulsé à un multiple entier de deux fois la fréquence de vibration du cycle de vibration.

4. Dispositif selon l'une quelconque des revendications 1 à 3, dans lequel l'unité de commande (18) est adaptée pour définir une durée d'éclairage du dispositif d'éclairage (19) de manière à ce qu'elle soit inférieure ou égale à un quart de la période de la forme d'onde de vibration et, plus préférentiellement, inférieure ou égale à un huitième de la période de la forme d'onde de vibration, et même plus préférentiellement inférieure ou égale à un seizième de la période de la forme d'onde de vibration.

5. Dispositif selon l'une quelconque des revendications 1 à 4, dans lequel le dispositif de capture d'image (16) comprend une caméra et dans lequel l'unité de commande (18) est adaptée pour commander la caméra pour capturer des première et seconde images pendant les première et seconde parties du cycle de vibration, respectivement.

6. Dispositif selon l'une quelconque des revendications 1 à 5, dans lequel le dispositif de soins personnels (10) comprend en outre :
un processeur d'image configuré pour générer une image reconstruite sur la base des première et seconde images.

7. Dispositif selon la revendication 6, dans lequel l'exigence prédéterminée est que l'amplitude de la vitesse angulaire détectée ne dépasse pas une première valeur seuil de vitesse.

8. Dispositif selon la revendication 6 ou 7 et dans lequel le processeur d'image est configuré pour traiter les première et seconde images avec un algorithme de traitement d'image pour identifier une région cible de chacune des première et seconde images, pour extraire des données d'image des régions cibles identifiées, et pour générer une image reconstruite comprenant les données d'image extraites.

9. Dispositif selon la revendication 6, dans lequel l'exigence prédéterminée est que l'amplitude de la vitesse angulaire détectée dépasse une seconde valeur de seuil de vitesse et dans lequel le processeur d'image est configuré pour traiter les première et seconde images avec un algorithme de combinaison d'images pour générer une image reconstruite sur la base des première et seconde images.

10. Dispositif selon l'une quelconque des revendications 1 à 9, dans lequel le dispositif de soins personnels comprend une brosse à dents, un embout buccal, un rasoir ou une brosse de nettoyage de la peau.

11. Procédé non thérapeutique de commande d'un dispositif de soins personnels, dans lequel le dispositif de soins personnels comprend : un dispositif de capture d'image adapté, lors de l'utilisation, pour capturer des images d'une ou de plusieurs caractéristiques d'un utilisateur ; des moyens de vibration adaptés pour faire vibrer le dispositif de soins personnels de telle sorte que, lors de l'utilisation, le dispositif de soins personnels vibre selon un cycle de vibration présentant une fréquence de vibration ; et un dispositif d'éclairage configuré, lors de l'utilisation, pour générer un éclairage pulsé pour éclairer une partie de l'utilisateur, et dans lequel le procédé comprend :
la détermination, en tant que partie cible du cycle de vibration, des première et seconde parties du cycle de vibration pour lesquelles la vitesse angulaire d'une partie du dispositif de soins personnels répond à une exigence prédéterminée ; et,
la commande du dispositif d'éclairage pour générer deux, ou plus, impulsions d'éclairage pendant un seul cycle de vibration du dispositif de soins personnels,
dans lequel la commande du dispositif d'éclairage comprend la commande du dispositif d'éclairage pour générer une première impulsion d'éclairage pendant la première partie du cycle de vibration et pour générer une seconde impulsion d'éclairage pendant la seconde partie du cycle de vibration.

12. Programme informatique comprenant un moyen de code de programme informatique qui est adapté, lorsque ledit programme informatique est exécuté sur un ordinateur, pour mettre en œuvre le procédé selon la revendication 11.
